# EUROPEAN PATENT SPECIFICATION

(11) **EP 1 326 755 B1**
(45) Date of publication and mention of the grant of the patent: **02.05.2007**
(21) Application number: 01986645.8
(22) Date of filing: 08.10.2001
(51) Int. Cl.: B60C 17/00, B60C 9/02, B60C 15/00, B60C 15/04

(54) **TIRE HAVING MORE CARCASS LAYERS IN SIDEWALL THAN IN BEAD**
REIFEN MIT MEHR UNTERBAUSCHICHTEN IN DER SEITENWAND ALS IM WULST
PNEU COMPORTANT UN PLUS GRAND NOMBRE DE NAPPES DE CARCASSE DANS LE FLANC QUE DANS LE TALON

(30) Priority: 10.10.2000 WO PCT/US00/27877
(43) Date of publication of application: 16.07.2003
(73) Proprietor: Société de Technologie Michelin, 63000 Clermont-Ferrand (FR); MICHELIN Recherche et Technique S.A., 1763 Granges-Paccot (CH)
(72) Inventor: COTTRELL, Roger, C., Simpsonville, SC 29681 (US); WILLARD, Walter, L., Jr., Greenville, SC 29609 (US)
(74) Representative: Dequire, Philippe Jean-Marie Denis
(86) International application number: PCT/EP2001/011572
(87) International publication number: WO 2002/030691

(56) References cited:
- WO-A-00/02740
- WO-A-00/73093
- FR-A- 1 452 730
- US-A- 1 461 984
- US-A- 5 660 656

## Description

### BACKGROUND OF THE INVENTION

The invention relates to a tire, more specifically to a pneumatic tire capable of continued mobility in a deflated condition.

Various tire constructions have been proposed for pneumatic runflat tires; that is tires, which normally operate in an inflated condition but which also permit a limited operation in a deflated condition. These tires constructions are generally formed of one or more generally radial carcasses which are turned up around one or more bead wires arranged in each bead, forming a wide curvilinear portion around the bead wires. The immediate consequence of such an arrangement is that the carcass path, to turn around the bead wire, automatically passes in the radially inner portion of the bead, between the bead wire and the axially inner limit of the sidewall, then turns underneath the bead wire and arrives in the bead axially outer zone. Such a path gives limited flexibility to the designer who can not provide a wide variety of configurations. Such a circular or curvilinear path of the carcass occupies a large volume.

To obtain the desired mobility in the deflated condition, many of these tires further employ sidewalls which are reinforced and thickened by interposing additional rubber layers between the carcasses or between the carcasses and the tire inner liner.

It is also important to provide proper deflated bead retention, so that the runflat tire remains seated on the rim during deflated operation.

Many solutions have been proposed including mechanical bead locks, special rim profiles or bead wire bundles of elongated cross-section. The elongated bead wire bundle functions both to anchor the carcass in the bead to resist tensile forces developed in the carcass and to retain the bead on the rim seat during deflated operation. This dual function necessitates design compromises.

The document US 5 660 656 describes a tire comprising a carcass which is anchored in the bead portion with an arrangement of circular reinforcing wire or cord disposed besides the carcass. Such an arrangement does not necessitate the use of a turned up portion around the bead wire. However, this document proposes tires with more carcass layers in the bead portions than in the sidewall portions of the tire. The document FR-A-1452730 describes a tire comprising a carcass structure anchored in each bead, each bead having a base which is intended to be mounted on the tire's design mounting rim, each bead being extended radially upward by a sidewall portion, a reinforced summit, the sidewall portions joining said summit, said bead further comprising an anchoring zone for anchoring said carcass in said bead, wherein said carcass structure comprises one circumferential alignment of cords in the bead anchoring zone which progressively divides in the sidewall portion in at least two circumferential alignments of cords. The document WO-A-00/73093 describes a tire for extended mobility having a carcass structure with one circumferential alignment of cords in the bead anchoring zone which progressively divides in the sidewall portion in at least two circumferential alignments of cords, a runflat reinforcing member being disposed between said two carcass cord alignments. In this embodiment, the anchoring zone is very slightly inclined.

### BRIEF SUMMARY OF THE INVENTION

The invention provides a tire comprising a carcass structure anchored in each side of the tire in a bead, each bead having a base which is intended to be mounted on the tire's design mounting rim, each bead being extended radially upward by a sidewall portion, a reinforced summit, the sidewall portions joining said summit, said bead further comprising an anchoring zone for anchoring said carcass in said bead, wherein said carcass structure comprises at least one circumferential alignment of cords in the bead anchoring zone which progressively divides in the sidewall portion in at least two circumferential alignments of cords, and wherein a runflat reinforcing member is disposed between said two carcass cord alignments and wherein said runflat reinforcing member is in direct contact with the cords of said two circumferential alignments.

Such a division of the carcass structure in the sidewall portion of the tire enables optimized carcass cords disposal. In the beads, the anchoring is appropriate and in the sidewall, the two carcass layers allow the insertion between them of a runflat reinforcing member appropriate for good runflat performance such as handling and durability. The direct contact between the runflat insert and the cords of the two adjacent carcass layers gives an excellent homogeneity of the mechanical properties of the structure, which drives to a better durability in 0-psi performance. The construction is also simplified due to the least number of rubber mixes necessary for its building.

Preferably, the anchoring zone is provided with at least one first bead reinforcement, at least partially bordering said carcass structure and a high modulus elastomeric material cooperating with said bead reinforcement and with said carcass structure for anchoring said a carcass structure in the bead. The bead reinforcement advantageously includes at least one substantially circumferentially oriented cord laterally bordering the carcass structure on at least one side.

This type of cooperation between the carcass structure and bead reinforcements provides design flexibility in many aspects. Moreover, such an anchoring zone is compact and very strong.

Such an arrangement provides the possibility of taking up the tension developed in the carcass during inflated or deflated use of the tire.

According to a preferred embodiment, the carcass structure comprises only one circumferential alignment in the summit portion of the tire. This has the advantage of limiting the thickness of the summit of the tire. Such a tire has reduced weight and rolling resistance and improved inflated and deflated performances.

The invention provides also a tire comprising a carcass structure anchored in each side of the tire in a bead, each bead having a base which is intended to be mounted on the tire's design mounting rim, each bead being extended radially upward by a sidewall portion, a reinforced summit, the sidewall portions joining said summit, said bead further comprising an anchoring zone for anchoring said carcass in said bead, wherein said carcass structure comprises at least one circumferential alignment of cords in the bead anchoring zone which progressively divides in the sidewall portion in at least two circumferential alignments of cords and wherein said carcass structure comprises only one circumferential alignment of cords in the summit portion of the tire.

### BRIEF DESCRIPTION OF THE DRAWINGS

Figure 1 illustrates the sidewall and bead portion of a runflat tire according to the invention, taken along a meridian plane through the axis of rotation, the tire having one carcass layer in the bead and summit and two in the sidewall;
Figure 2 illustrates the sidewall and bead portion of a second embodiment of a runflat tire according to the invention having three carcass layers in the sidewall, two in the bead and one in the summit; and
Figure 3 is an enlarged perspective view of the bead portion of a runflat tire corresponding to the second embodiment of the invention showing the common circumferential disposition of the first and second carcass layers.

### DETAILED DESCRIPTION OF THE INVENTION

"Axial" and "axially" mean the lines or directions that are parallel to the axis of rotation of the tire.

"Radial" and "radially" mean directions radially toward or away the axis of rotation of the tire.

"Angle defined with respect to an axial direction" means an angle measured axially and radially outwardly from the innerside of the tire; such an angle is between 0 and 180 degrees.

The tire of the invention comprises a bead 1 provided with a seat 12, specially adapted to fit on the tire's design mounting rim. The bead extends substantially radially to the sidewall 13. The summit 11 comprises reinforcement layers of known type.

The tire comprises a carcass structure 5, extending from bead to bead or leaving a gap between two half structures, for instance in the substantially median portion of the summit. The radially inwardmost extent of the carcass structure 5 terminates in an anchoring zone 2 of the bead 1. Advantageously, the carcass structure is not turned up around bead cores or other bead reinforcement That is to say, each axial coordinate defining the profile of the carcass structure has a unique radial position for each radial position less than that of the tire equator. The carcass structure is anchored in the bead portion by a bead reinforcement 3. A preferred embodiment of such a reinforcement comprises a cord arrangement 4 provided with at least one substantially circumferentially oriented cord laterally bordering the carcass structure on at least one side. In this instance "anchored" in the bead portion means that the cord arrangement resist the tension developed in the carcass structure during inflated or deflated use of the tire by the adherence of the carcass reinforcing structure laterally with the cord arrangement rather than being wound around a traditional bead core.

The mechanical properties of the anchoring zone 4 are optimized in using an elastomeric bead filler having a high elasticity modulus.

Other alternative carcass anchorings or dispositions of the carcass layers in the bead portion have been disclosed in US 5,660,656 to Herbelleau et al and are incorporated herein by reference.

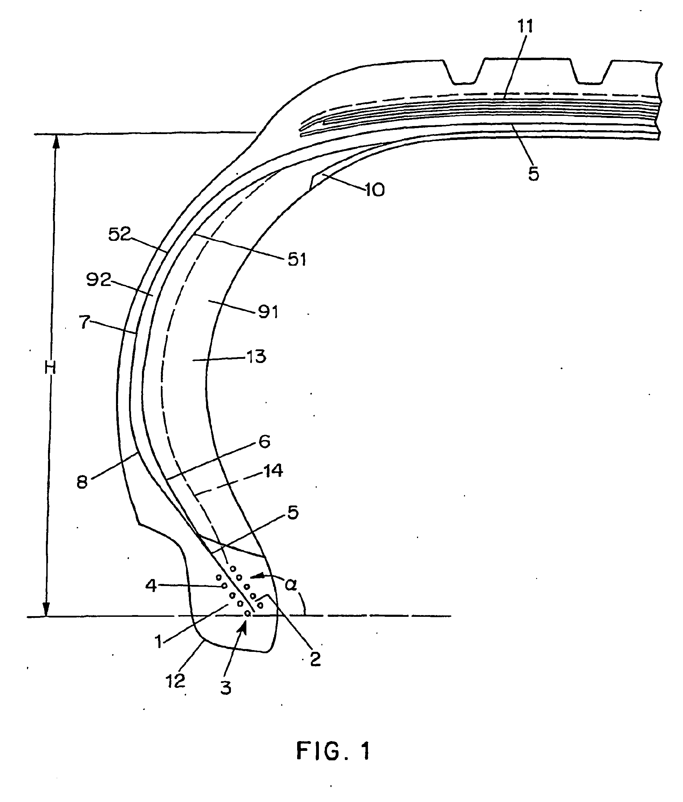

Figure 1 illustrates a first embodiment of the invention in which the carcass structure 5 has more than one carcass layer within some portion of the tire. The carcass structure 5 comprises one circumferential alignment of cords in the summit 11. In the sidewall portion 13 of the tire, the carcass structure 5 is divided in two circumferential alignments of radial cords 51 and 52. These two circumferential alignments of cords progressively move axially away from each other. In the bead 1, the two circumferential alignments of cords 51 and 52 join and give a common circumferential alignment of cords 5. Accordingly, in the bead 1, there is only one circumferential alignment of cords.

This carcass structure is very flexible and allows placing the carcass cords where they are most useful. For instance, the density of cords of carcass layer 52 is advantageously superior to the carcass density of cords of the carcass layers 51. The cords of the outer carcass layer are subjected to high tension stress-strain cycles in inflated and deflated operation. These cords are well designed to support these high tension cycles and the number of cords is defined accordingly. The cords of the inner carcass layer are subjected in deflated operation to stress-strain cycles with compression. In this case, it is the rubber mixes which are well designed to support these compression stresses. The number of cords needs not to be high. It allows also a limited thickness of the carcass structure in the summit and an appropriate anchoring in the bead portion. The anchoring of the carcass structure 5 is achieved by two windings 41 and 42 of circumferential oriented cords, which axially border the circumferential alignment of cords 51 of the carcass structure with the interposition of a high modulus rubber layer.

Advantageously, runflat insert 92 is placed in the sidewall between the carcass layers 51-52 and, runflat insert 91 is placed between the carcass structure 5 and the inner side of the tire in order to have a good 0-psi performance. Preferably, these runflat inserts are in direct contact of the cords of the adjacent carcass layers. This means that the rubber mixes constituting the runflat inserts are in intimate contact with at least part of the outer circumference of the cord, and that during the building of the tire, no usual cushion rubber mix of low modulus of elasticity has been used. Accordingly, the sidewall structure has a better durability in deflated operation.

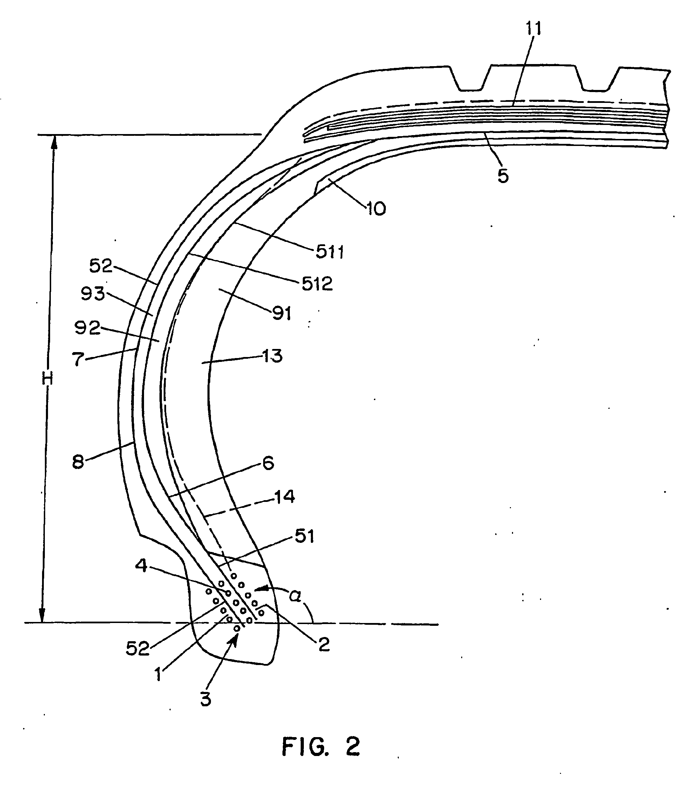

Figure 2 illustrates a second embodiment of the invention in which the carcass structure 5 comprises one circumferential alignment of cords in the summit 11. In the sidewall portion 13 of the tire, the carcass structure 5 is divided in three circumferential alignments of radial cords 511, 512 and 52. These three circumferential alignments of cords progressively move axially away from each other. In the bead 1, the two circumferential alignments of cords 511 and 512 join and give a common circumferential alignment of cords 51. Accordingly, in the bead 1, there are two circumferential alignments of cords 51 and 52.

The density of cords of carcass layer 52 is advantageously superior to the carcass density of cords of the carcass layers 511 and 512. This structure allows a limited thickness of the carcass structure in the summit and an appropriate anchoring in the bead portion. The anchoring of the carcass structure 5 is achieved by three windings 41, 42, 43 of circumferential oriented cords, which axially border the two circumferential alignments of cords 51 and 52 of the carcass structure with the interposition of a high modulus rubber layer.

Advantageously, another runflat insert 93 is placed in the sidewall between the carcass layers 512 and 52 in order to improve the 0-psi performance. Preferably, as in the second embodiment the runflat inserts are in direct contact of the cords of the adjacent carcass layers.

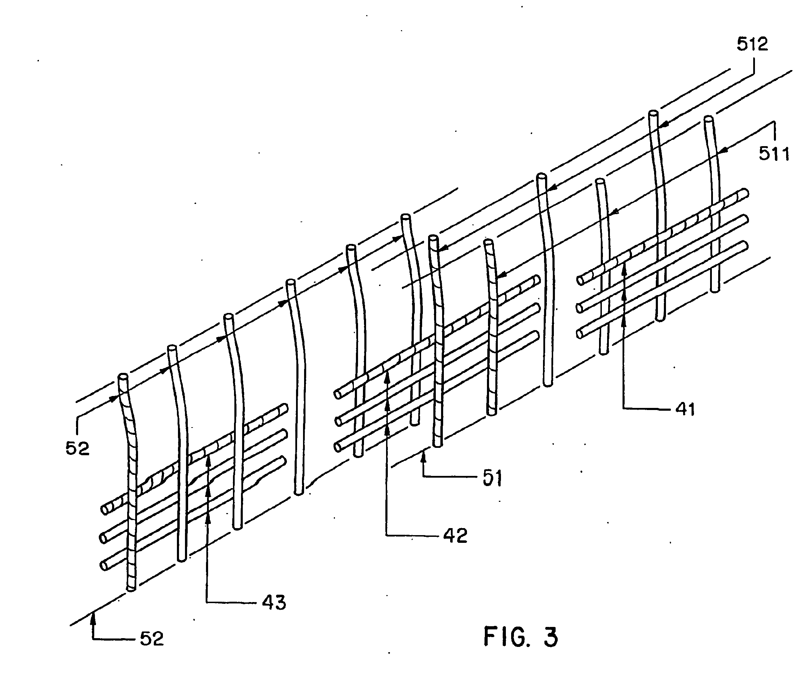

Figure 3 illustrates the structure of the radial and circumferential cords in the bead 1 of the second embodiment. In the anchoring zone, axially outward, we have the first circumferentially oriented winding 41, the first carcass circumferential alignment 51, the second circumferentially oriented winding 42, the second carcass circumferential alignment 52 and the third circumferentially oriented winding 43. Radially outwardly from the anchoring zone, the first carcass circumferential alignment 51 is divided in two carcass circumferential alignments 511 and 512. The rubber mixes are not represented in this figure for clarity. All these cords are embedded, at least in the anchoring zone, by a high modulus rubber mix. Preferably, this rubber mix has a shore A hardness over 70.

All the carcass cords presented in figure 3 are placed with a circumferentially shifted position, which allows them to form one sole alignment in the summit portion of the tire. This allows minimizing the thickness of the summit portion.

As shown, for instance, in the embodiments illustrated in figure 1 and 2, the carcass structure 5 is provided with a substantially linear portion 6. This portion extends between the anchoring zone 2 and a transition zone 8. The general orientation of the portion 6 is preferably slightly inclined from the bead 1 axially inner portion towards a radially and axially outer portion of the wall.

Considered in three dimensions, between the anchoring zone and the transition zone along the sidewall portion, the carcass structure is in the shape of a truncated cone.

The length of said substantially linear portion 6 is preferably between 25% and 75% of the tire side height H and most preferably around 40% of the tire side height H. The tire side height H, as shown in figure 1, is the length of a rectilinear radial line extending from the bottom or radially inward portion of the anchoring zone to the base or radially inward portion of the summit reinforcement layers.

The transition zone substantially corresponds to the portion of the carcass path radially outward of the substantially linear portion, where the path changes direction or shape. Radially outward of the transition zone, the carcass is provided with a second portion, extending radially from the transition zone to the axially outer portion of the summit. The preferred position of the transition zone is between 25% to 75% of the tire side height H, and most preferably around 40% of the tire side height H.

The transition zone preferably comprises a substantially curvilinear portion disposed between the substantially linear portion 6 and the second portion 7, connecting these two portions 6 and 7 of the carcass. A small radius enables to concentrate the change of orientation of the carcass path in a compact area.

At the transition zone 8, the carcass structure is no longer rectilinear, but rather curvilinear. From this zone towards the summit zone, the general shape and orientation of the carcass structure 5 is such that it extends from the transition zone 8 towards the tire summit in a path oriented axially inwardly and radially outwardly, forming the second portion or top sidewall portion 7.

Preferably, as shown in figure 1, the second portion 7 extends in the outer portion of the sidewall with respect to the center line 14. The second portion 7 extends up to the summit where it may or not be interrupted, depending on the embodiment.

In the embodiments shown in figure 1 and 2, the top sidewall portion 7 have a substantially curvilinear profile, with a large radius. The top sidewall portion 7 could also have a substantially rectilinear profile between the transition zone 8 and the border of the summit.

In fact, in this upper section of the tire sidewall, it is also advantageous to adapt the carcass structure path to the tire sidewall thickness and geometry, similarly to the first rectilinear portion. Depending on the sidewall profile, it may be more appropriate to provide a carcass structure either substantially rectilinear on a more or less long proportion, or a curvilinear path.

As already explained, the tire of the invention preferably comprises a runflat insert 91 provided in the axially inner portion of the sidewall. This insert is advantageously substantially airtight. Efficient impermeability is possible when a substantially thick runflat insert is used. With such an arrangement, no inner liner is required in most of the sidewall portion. The substantially thick runflat insert provides appropriate impermeability. This enables to use a substantially airtight inner liner 10 such as a butyl based inner liner in a limited portion of the tire profile, for instance along the summit portion, to protect the summit from diffusion.

In the embodiments shown in figure 1 and 2, the anchoring zone 2 is substantially inclined. The general orientation of the zone 2 is preferably slightly inclined from the bead radially and axially inner portion towards a radially and axially outer portion of the bead. The angle α, measured with respect to an axial direction, indicates the inclination of the inner portion of the carcass structure embedded in the anchoring zone 2. This inclination is advantageously between 110 and 140 degrees, and preferably between 120 and 130 degrees. The cooperating cords of the arrangement 4 are preferably disposed or aligned to form a substantially similar angle.

Such an arrangement with inclined anchoring zone or inclined portion of the carcass path within the anchoring zone allows to provide a general path of the anchoring zone substantially aligned with respect to the portion 6 of the carcass structure. The traditional curved carcass portion in the radially outer zone of the anchoring zone may thus be reduced or even suppressed, as shown in figure 2. This inclined zone provides a good level of bead retention when the tire is deflated. It also enables to dispose the carcass structure axially outward with respect to the center line 14. As shown in figures 1 and 2, radially outward of the anchoring zone 2, the carcass path extends in the axially outer portion of the sidewall.

In order to position the reinforcement cords as precisely as possible, it is very advantageous to build the tire on a rigid support, for instance a rigid core imposing the shape of its inner cavity. All the components of the tire, which are disposed directly in their final place, are applied onto this core in the order required by the final architecture, without undergoing shaping at any moment of the building. In this case, the tire can be molded and vulcanized in the manner explained in US 4,895,692.

While the invention has been described in combination with embodiments thereof, it is evident that many alternatives, modifications, and variations will be apparent to those skilled in the art in light of the foregoing teachings. Accordingly, the invention is intended to embrace all such alternatives, modifications and variations as fall within the scope of the appended claims.

## Claims (Claims for the following Contracting State(s): AT, BE, CH, DE, DK, ES, FR, GB, GR, IE, IT, LI, LU, MC, NL, PT, SE)

1. A tire comprising a carcass structure (5) anchored in each side of the tire in a bead, each bead (1) having a base which is intended to be mounted on the tire's design mounting rim, each bead being extended radially upward by a sidewall portion (13), a reinforced summit (11), the sidewall portions joining said summit, said bead further comprising an anchoring zone (2) for anchoring said carcass (5) in said bead (1), said carcass structure comprising at least one circumferential alignment of cords in the bead anchoring zone which progressively divides in the sidewall portion in at least two circumferential alignments of cords, wherein a runflat reinforcing member (92) is disposed between said two carcass cord alignments and the inclination of the inner portion of the carcass structure embedded in the anchoring zone (2) is between 120 and 130 degrees.

2. A tire comprising a carcass structure (5) anchored in each side of the tire in a bead, each bead (1) having a base which is intended to be mounted on the tire's design mounting rim, each bead being extended radially upward by a sidewall portion (13), a reinforced summit (11), the sidewall portions joining said summit, said bead further comprising an anchoring zone (2) for anchoring said carcass (5) in said bead (1), said carcass structure comprising at least one circumferential alignment of cords in the bead anchoring zone which progressively divides in the sidewall portion in at least two circumferential alignments of cords, wherein a runflat reinforcing member (92) is disposed between said two carcass cord alignments and said runflat reinforcing member (92) is in direct contact with the cords of said two circumferential alignments.

3. A tire comprising a carcass structure (5) anchored in each side of the tire in a bead, each bead (1) having a base which is intended to be mounted on the tire's design mounting rim, each bead being extended radially upward by a sidewall portion (13), a reinforced summit (11), the sidewall portions joining said summit, said bead further comprising an anchoring zone (2) for anchoring said carcass (5) in said bead (1), said carcass structure comprising at least one circumferential alignment of cords in the bead anchoring zone which progressively divides in the sidewall portion in at least two circumferential alignments of cords, wherein a runflat reinforcing member (92) is disposed between said two carcass cord alignments and in the sidewall portion, the cord density of the most axially outward carcass circumferential cord alignment (52) is superior to the cord density of the other inward carcass circumferential cord alignment (51, 511, 512).

4. A tire according to any one of preceding claims, wherein said carcass structure (5) comprises only one circumferential alignment in the summit portion of the tire.

5. A tire according to any one of preceding claims, wherein said anchoring zone (2) is provided with at least one first bead reinforcement, at least partially bordering said carcass structure and an elastomeric material cooperating with said bead reinforcement and with said carcass structure.

6. A tire according to claim 5, wherein said bead reinforcement includes at least one substantially circumferentially oriented cord laterally bordering the carcass structure on at least one side.

## Claims (Claims for the following Contracting State(s): CY, FI, TR)

1. A tire comprising a carcass structure (5) anchored in each side of the tire in a bead, each bead (1) having a base which is intended to be mounted on the tire's design mounting rim, each bead being extended radially upward by a sidewall portion (13), a reinforced summit (11), the sidewall portions joining said summit, said bead further comprising an anchoring zone (2) for anchoring said carcass (5) in said bead (1), said carcass structure comprising at least one circumferential alignment of cords in the bead anchoring zone which progressively divides in the sidewall portion in at least two circumferential alignments of cords, **characterized in that** a runflat reinforcing member (92) is disposed between said two carcass cord alignments.

2. A tire according to claim one, wherein said carcass structure (5) comprises only one circumferential alignment in the summit portion of the tire.

3. A tire according to claim 1 or 2, wherein said runflat reinforcing member (92) is in direct contact with the cords of said two circumferential alignments.

4. A tire according to any one of preceding claims, wherein said anchoring zone (2) is provided with at least one first bead reinforcement, at least partially bordering said carcass structure (5) and an elastomeric material cooperating with said bead reinforcement and with said carcass structure.

5. A tire according to claim 4, wherein said bead reinforcement includes at least one substantially circumferentially oriented cord laterally bordering the carcass structure on at least one side.

6. A tire according to any one of the preceding claims, wherein the inclination α, measured with respect to an axial direction, of the inner portion of the carcass structure embedded in the anchoring zone (2) is between 110 and 140 degrees and preferably between 120 and 130 degrees,

7. A tire according to any one of preceding claims, wherein, in the sidewall portion, the cord density of the most axially outward carcass circumferential cord alignment (52) is superior to the cord density of the other inward carcass circumferential cord alignment (51, 511, 512).

## Patentansprüche (Patentansprüche für folgende(n) Vertragsstaat(en): AT, BE, CH, DE, DK, ES, FR, GB, GR, IE, IT, LI, LU, MC, NL, PT, SE)

1. Reifen mit einer Unterbaustruktur (5), die in jeder Seite des Reifens in einem Wulst verankert ist, wobei jeder Wulst (1) eine Basis aufweist, die an der Montagefelge der Reifenausführung befestigt werden soll, wobei jeder Wulst durch einen Seitenwandteil (13) und einen verstärkten Scheitel (11) radial nach oben verlängert ist, wobei die Seitenwandteile mit dem Scheitel verbunden sind, wobei der Wulst weiterhin einen Verankerungsbereich (2) zum Verankern des Unterbaus (5) im Wulst (1) umfasst, wobei die Unterbaustruktur mindestens eine Cordumfangsausrichtung im Wulstverankerungsbereich umfasst, die sich im Seitenwandteil progressiv in mindestens zwei Cordumfangsausrichtungen teilt, bei dem ein Run-Flat-Verstärkungsglied (92) zwischen den beiden Cordunterbauausrichtungen angeordnet ist und die Neigung des im Verankerungsbereich (2) eingebetteten Innenteils der Unterbaustruktur zwischen 120 und 130 Grad liegt.

2. Reifen mit einer Unterbaustruktur (5), die in jeder Seite des Reifens in einem Wulst verankert ist, wobei jeder Wulst (1) eine Basis aufweist, die an der Montagefelge der Reifenausführung befestigt werden soll, wobei jeder Wulst durch einen Seitenwandteil (13) und einen verstärkten Scheitel (11) radial nach oben verlängert ist, wobei die Seitenwandteile mit dem Scheitel verbunden sind, wobei der Wulst weiterhin einen Verankerungsbereich (2) zum Verankern des Unterbaus (5) im Wulst (1) umfasst, wobei die Unterbaustruktur mindestens eine Cordumfangsausrichtung im Wulstverankerungsbereich umfasst, die sich im Seitenwandteil progressiv in mindestens zwei Cordumfangsausrichtungen teilt, bei dem ein Run-Flat-Verstärkungsglied (92) zwischen den beiden Cordunterbauausrichtungen angeordnet ist und das Run-Flat-Verstärkungsglied (92) mit den Cords der beiden Umfangsausrichtungen in direktem Kontakt steht.

3. Reifen mit einer Unterbaustruktur (5), die in jeder Seite des Reifens in einem Wulst verankert ist, wobei jeder Wulst (1) eine Basis aufweist, die an der Montagefelge der Reifenausführung befestigt werden soll, wobei jeder Wulst durch einen Seitenwandteil (13) und einen verstärkten Scheitel (11) radial nach oben verlängert ist, wobei die Seitenwandteile mit dem Scheitel verbunden sind, wobei der Wulst weiterhin einen Verankerungsbereich (2) zum Verankern des Unterbaus (5) im Wulst (1) umfasst, wobei die Unterbaustruktur mindestens eine Cordumfangsausrichtung im Wulstverankerungsbereich umfasst, die sich im Seitenwandteil progressiv in mindestens zwei Cordumfangsausrichtungen teilt, bei dem ein Run-Flat-Verstärkungsglied (92) zwischen den beiden Cordunterbauausrichtungen angeordnet ist und im Seitenwandteil die Corddichte der axial am weitesten außen liegenden Cordumfangsausrichtung (52) größer ist als die Corddichte der anderen, innen liegenden Unterbaucordumfangsausrichtung (51, 511, 512).

4. Reifen nach einem der vorhergehenden Ansprüche, bei dem die Unterbaustruktur (5) nur eine Umfangsausrichtung im Scheitelteil des Reifens umfasst.

5. Reifen nach einem der vorhergehenden Ansprüche, bei dem der Verankerungsbereich (2) mit mindestens einer ersten Wulstverstärkung, die zumindest teilweise an der Unterbaustruktur angrenzt, und einem elastomeren Material versehen ist, das mit der Wulstverstärkung und mit der Unterbaustruktur zusammenwirkt .

6. Reifen nach Anspruch 5, bei dem die Wulstverstärkung mindestens einen im Wesentlichen um den Umfang ausgerichteten Cord enthält, der auf mindestens einer Seite lateral an der Unterbaustruktur angrenzt.

## Patentansprüche (Patentansprüche für folgende(n) Vertragsstaat(en): CY, FI, TR)

1. Reifen mit einer Unterbaustruktur (5), die in jeder Seite des Reifens in einem Wulst verankert ist, wobei jeder Wulst (1) eine Basis aufweist, die an der Montagefelge der Reifenausführung befestigt werden soll, wobei jeder Wulst durch einen Seitenwandteil (13) und einen verstärkten Scheitel (11) radial nach oben verlängert ist, wobei die Seitenwandteile mit dem Scheitel verbunden sind, wobei der Wulst weiterhin einen Verankerungsbereich (2) zum Verankern des Unterbaus (5) im Wulst (1) umfasst, wobei die Unterbaustruktur mindestens eine Cordumfangsausrichtung im Wulstverankerungsbereich umfasst, die sich im Seitenwandteil progressiv in mindestens zwei Cordumfangsausrichtungen teilt, **dadurch gekennzeichnet, dass** ein Run-Flat-Verstärkungsglied (92) zwischen den beiden Cordunterbauausrichtungen angeordnet ist.

2. Reifen nach Anspruch 1, bei dem die Unterbaustruktur (5) nur eine Umfangsausrichtung im Scheitelteil des Reifens umfasst.

3. Reifen nach Anspruch 1 oder 2, bei dem das Run-Flat-Verstärkungsglied (92) mit den Cords der beiden Umfangsausrichtungen in direktem Kontakt steht.

4. Reifen nach einem der vorhergehenden Ansprüche, bei dem der Verankerungsbereich (2) mit mindestens einer ersten Wulstverstärkung, die zumindest teilweise an der Unterbaustruktur (5) angrenzt, und einem elastomeren Material versehen ist, das mit der Wulstverstärkung und mit der Unterbaustruktur zusammenwirkt.

5. Reifen nach Anspruch 4, bei dem die Wulstverstärkung mindestens einen im Wesentlichen um den Umfang ausgerichteten Cord enthält, der auf mindestens einer Seite lateral an der Unterbaustruktur angrenzt.

6. Reifen nach einem der vorhergehenden Ansprüche, bei dem die bezüglich der Axialrichtung gemessene Neigung α des im Verankerungsbereich (2) eingebetteten Innenteils der Unterbaustruktur zwischen 110 und 140 Grad vorzugsweise zwischen 120 und 130 Grad liegt.

7. Reifen nach einem der vorhergehenden Ansprüche, bei dem im Seitenwandteil die Corddichte der axial am weitesten außen liegenden Cordumfangsausrichtung (52) größer ist als die Corddichte der anderen, innen liegenden Unterbaucordumfangsausrichtung (51, 511, 512).

## Revendications (Revendications pour l'(les) Etat(s) contractant(s) suivant(s): AT, BE, CH, DE, DK, ES, FR, GB, GR, IE, IT, LI, LU, MC, NL, PT, SE)

1. Pneu comprenant une structure de carcasse (5) ancrée dans chaque flanc du pneu dans un talon, chaque talon (1) comprenant une base qui est destinée à être montée sur la jante de montage adaptée à la conception du pneu, chaque talon étant prolongé radialement vers le haut par une partie de flanc (13), un sommet renforcé (11), les parties de flanc se joignant audit sommet, ledit talon comprenant en outre une zone d'ancrage (2) pour ancrer ladite carcasse (5) dans ledit talon (1), ladite structure de carcasse comprenant au moins un alignement circonférentiel de câbles dans la zone d'ancrage de talon qui se divise progressivement dans la partie de flanc en au moins deux alignements circonférentiels de câbles, dans lequel un élément de renforcement pour roulage à plat (92) est disposé entre lesdits deux alignements de câbles de carcasse et l'inclinaison de la partie inférieure de la structure de carcasse incorporée dans la zone d'ancrage (2) est comprise entre 120 et 130 degrés.

2. Pneu comprenant une structure de carcasse (5) ancrée dans chaque flanc du pneu dans un talon, chaque talon (1) comprenant une base qui est destinée à être montée sur la jante de montage adaptée à la conception du pneu, chaque talon étant prolongé radialement vers le haut par une partie de flanc (13), un sommet renforcé (11), les parties de flanc se joignant audit sommet, ledit talon comprenant en outre une zone d'ancrage (2) pour ancrer ladite carcasse (5) dans ledit talon (1), ladite structure de carcasse comprenant au moins un alignement circonférentiel de câbles dans la zone d'ancrage de talon qui se divise progressivement dans la partie de flanc en au moins deux alignements circonférentiels de câbles, dans lequel un élément de renforcement pour roulage à plat (92) est disposé entre lesdits deux alignements de câbles de carcasse et ledit élément de renforcement pour roulage à plat (92) est en contact direct avec les câbles desdits deux alignements circonférentiels.

3. Pneu comprenant une structure de carcasse (5) ancrée dans chaque flanc du pneu dans un talon, chaque talon (1) comprenant une base qui est destinée à être montée sur la jante de montage adaptée à la conception du pneu, chaque talon étant prolongé radialement vers le haut par une partie de flanc (13), un sommet renforcé (11), les parties de flanc se joignant audit sommet, ledit talon comprenant en outre une zone d'ancrage (2) pour ancrer ladite carcasse (5) dans ledit talon (1), ladite structure de carcasse comprenant au moins un alignement circonférentiel de câbles dans la zone d'ancrage de talon qui se divise progressivement dans la partie de flanc en au moins deux alignements circonférentiels de câbles, dans lequel un élément de renforcement pour roulage à plat (92) est disposé entre lesdits deux alignements de câbles de carcasse et, dans la partie de flanc, la densité de câbles de l'alignement de câbles circonférentiel de carcasse axialement le plus extérieur (52) est supérieur à la densité de câbles de l'autre alignement de câbles circonférentiel de carcasse intérieur (51, 511, 512).

4. Pneu selon l'une quelconque des revendications précédentes, dans lequel ladite structure de carcasse (5) comprend un seul alignement circonférentiel dans la partie de sommet du pneu.

5. Pneu selon l'une quelconque des revendications précédentes, dans lequel ladite zone d'ancrage (2) comprend au moins un premier renfort de talon bordant au moins partiellement ladite structure de carcasse, et une matière élastomère coopérant avec ledit renfort de talon et avec ladite structure de carcasse.

6. Pneu selon la revendication 5, dans lequel ledit renfort de talon comprend au moins un câble orienté sensiblement circonférentiellement bordant latéralement la structure de carcasse sur au moins un flanc.

## Revendications (Revendications pour l'(les) Etat(s) contractant(s) suivant(s): CY, FI, TR)

1. Pneu comprenant une structure de carcasse (5) ancrée dans chaque flanc du pneu dans un talon, chaque talon (1) comprenant une base qui est destinée à être montée sur la jante de montage adaptée à la conception du pneu, chaque talon étant prolongé radialement vers le haut par une partie de flanc (13), un sommet renforcé (11), les parties de flanc se joignant audit sommet, ledit talon comprenant en outre une zone d'ancrage (2) pour ancrer ladite carcasse (5) dans ledit talon (1), ladite structure de carcasse comprenant au moins un alignement circonférentiel de câbles dans la zone d'ancrage de talon qui se divise progressivement dans la partie de flanc en au moins deux alignements circonférentiels de câbles, **caractérisé en ce qu'**un élément de renforcement pour roulage à plat (92) est disposé entre lesdits deux alignements de câbles de carcasse.

2. Pneu selon la revendication 1, dans lequel ladite structure de carcasse (5) comprend un seul alignement circonférentiel dans la partie de sommet du pneu.

3. Pneu selon la revendication 1 ou 2, dans lequel ledit élément de renforcement pour roulage à plat (92) est en contact direct avec les câbles desdits deux alignements circonférentiels.

4. Pneu selon l'une quelconque des revendications précédentes, dans lequel ladite zone d'ancrage (2) comprend au moins un premier renfort de talon bordant au moins partiellement ladite structure de carcasse (5), et une matière élastomère coopérant avec ledit renfort de talon et avec ladite structure de carcasse.

5. Pneu selon la revendication 4, dans lequel ledit renfort de talon comprend au moins un câble orienté sensiblement circonférentiellement bordant latéralement la structure de carcasse sur au moins un flanc.

6. Pneu selon l'une quelconque des revendications précédentes, dans lequel l'inclinaison α, mesurée par rapport à une direction axiale, de la partie inférieure de la structure de carcasse incorporée dans la zone d'ancrage (2) est comprise entre 110 et 140 degrés, et de préférence entre 120 et 130 degrés.

7. Pneu selon l'une quelconque des revendications précédentes, dans lequel, dans la partie de flanc, la densité de câbles de l'alignement de câbles circonférentiel de carcasse axialement le plus extérieur (52) est supérieur à la densité de câbles de l'autre alignement de câbles circonférentiel de carcasse intérieur (51, 511, 512).
